# EUROPÄISCHE PATENTSCHRIFT

(11) **EP 3 153 694 B1**
(45) Veröffentlichungstag und Bekanntmachung des Hinweises auf die Patenterteilung: **08.08.2018**
(21) Anmeldenummer: 16183663.0
(22) Anmeldetag: 11.08.2016
(51) Int. Cl.: F02M 21/02, F02M 35/10

(54) **VERFAHREN ZUM BETREIBEN EINER BRENNKRAFTMASCHINE SOWIE VORRICHTUNG ZUR DURCHFÜHRUNG DES VERFAHRENS**
METHOD FOR OPERATING A COMBUSTION ENGINE AND DEVICE FOR EXECUTING THE METHOD
PROCEDE DE FONCTIONNEMENT D'UN MOTEUR A COMBUSTION INTERNE ET DISPOSITIF D'EXECUTION DU PROCEDE

(30) Priorität: 07.10.2015 DE 102015219352; 21.01.2016 DE 102016200776
(43) Veröffentlichungstag der Anmeldung: 12.04.2017
(73) Patentinhaber: ROBERT BOSCH GMBH, 70442 Stuttgart (DE)
(72) Erfinder: Wengert, Andreas, 71522 Backnang (DE)

(56) Entgegenhaltungen:
- DE-A1-102013 017 853
- JP-A- 2003 120 429
- JP-A- 2005 076 543
- JP-A- 2008 169 706
- US-A- 5 329 908

## Beschreibung

Die Erfindung betrifft ein Verfahren zum Betreiben einer Brennkraftmaschine mit den Merkmalen des Oberbegriffs des Anspruchs 1. Ferner betrifft die Erfindung eine Vorrichtung zur Durchführung des Verfahrens mit den Merkmalen des Oberbegriffs des Anspruchs 6. Bei dem Betrieb der Brennkraftmaschine wird ein unter Druck stehender, gasförmiger Brennstoff in einen Brennraum der Brennkraftmaschine eingebracht und verbrannt, wobei dem gasförmigen Kraftstoff vor der Verbrennung Luft zugeführt wird. Bei der Vorrichtung zur Durchführung des Verfahrens handelt es sich daher insbesondere um einen Gasmotor, der beispielsweise in Personenkraft- oder Nutzfahrzeugen Einsatz finden kann.

### Stand der Technik

Aus dem Stand der Technik sind Dual-Fuel-Injektoren zum Einbringen unter hohem Druck stehender, gasförmiger Kraftstoffe bekannt. Diese werden über einen zweiten, in der Regel flüssigen Kraftstoff gesteuert. Die Einbringung in den Brennraum kann dabei unmittelbar oder mittelbar über ein Ansaugrohr eines der Luftzufuhr dienenden Ansaugtrakts erfolgen. Insbesondere, wenn der gasförmige Kraftstoff unmittelbar in den Brennraum der Brennkraftmaschine eingebracht werden soll, bedarf es eines sehr hohen Gasdrucks.
Bei Dual-Fuel-Injektoren besteht daher regelmäßig die Gefahr, dass sich die beiden Kraftstoffe vermischen bzw., dass das unter hohem Druck stehende Gas in den Bereich des flüssigen Kraftstoffs eindringt. Da der flüssige Kraftstoff in der Regel in einem offenen Kreislauf geführt wird, kann auf diesem Wege in den Kreislauf eindringendes, brennbares Gas in die Umgebung entweichen. Dies gilt es bei der Berechnung der Gesamtemissionen der Brennkraftmaschine zu berücksichtigen. Ferner kann das eindringende Gas die Steuereigenschaften des flüssigen Kraftstoffs beeinflussen, so dass es zu Funktionsstörungen kommen kann.

Der unter hohem Druck stehende, gasförmige Kraftstoff selbst kann in der Regel nicht als Steuermedium eingesetzt werden, da der notwendige Druckabbau zu große Strömungsquerschnitte bzw. ein zu großes Volumen erfordern würde. Zudem ist eine Rückführung in einen Vorratsbehälter des gasförmigen Kraftstoffs nicht oder nur unter sehr hohem Aufwand möglich, da im Vorratsbehälter regelmäßig ein anderes Druck- und/oder Temperaturniveau herrscht.

Das Dokument US 5 329 908 A zeigt ein Verfahren zum Betreiben einer Brennkraftmaschine, bei dem ein unter Druck stehender, gasförmiger Kraftstoff unter Verwendung eines Kraftstoffinjektors unmittelbar in einen Brennraum einer Brennkraftmaschine gebracht wird. Ähnliche Verfahren werden auch in den Schriften JP 2005 076543 A und JP 2008 169706 A offenbart.

Der vorliegenden Erfindung liegt die Aufgabe zugrunde, ein Verfahren zum Betreiben einer Brennkraftmaschine unter Verwendung eines unter Druck stehenden gasförmigen Kraftstoffs anzugeben, bei dem die vorstehend genannten Nachteile umgangen werden. Das Verfahren soll insbesondre einen effizienten Betrieb der Brennkraftmaschine ermöglichen. Ferner soll eine Vorrichtung zur Durchführung des Verfahrens angegeben werden, die einfach aufgebaut und somit kostengünstig herstellbar ist.

Zur Lösung der Aufgabe bzw. Aufgaben werden das Verfahren mit den Merkmalen des Anspruchs 1 und die Vorrichtung mit den Merkmalen des Anspruchs 6 angegeben. Vorteilhafte Weiterbildungen sind den jeweiligen Unteransprüchen zu entnehmen.

### Offenbarung der Erfindung

Bei dem zum Betreiben einer Brennkraftmaschine vorgeschlagenen Verfahren wird ein unter Druck stehender, gasförmiger Kraftstoff unter Verwendung eines Kraftstoffinjektors unmittelbar über ein Ansaugrohr eines der Luftzufuhr dienenden Ansaugtrakts in einen Brennraum der Brennkraftmaschine eingebracht. Erfindungsgemäß wird hierbei eine Steuer- und/oder Leckagemenge des Kraftstoffinjektors über eine Leitung in das Ansaugrohr des Ansaugtrakts, eingeleitet. Die Steuer- und/oder Leckagemenge des Kraftstoffinjektors wird demnach ebenfalls der Verbrennung zugeführt, so dass eine separate Speicherung oder Rückführung in einen Vorratsbehälter bzw. Tank entfällt. Als Steuermedium für den Kraftstoffinjektor wird daher bevorzugt der mittels des Kraftstoffinjektors einzubringende gasförmige Kraftstoff verwendet, so dass es nur ein Medium bzw. nur einen Kraftstoff vorzuhalten gilt.
Vorteilhafterweise wird bei der Durchführung des Verfahrens ein Kraftstoffinjektor eingesetzt, dessen Steuerraum sehr klein ist, so dass nur sehr kleine Steuermengen anfallen. Kleine Mengen erleichtern den für den Einsatz als Steuermedium erforderlichen Druckabbau. Bevorzugt ist die während eines Einspritz- bzw. Einblaszyklus zugeführte Steuermenge kleiner als eine im Leerlauf der Brennkraftmaschine benötigte Kraftstoffmenge, so dass ferner sichergestellt ist, dass die zur Verfügung stehende Gasmenge verwertet wird. Im Ergebnis kann somit ein Gasmotor effizienter betrieben werden.
Der Verzicht auf ein flüssiges Steuermedium zur Steuerung des Kraftstoffinjektors hat ferner den Vorteil, dass eine unerwünschte Vermischung des gasförmigen und des flüssigen Mediums nicht mehr zu befürchten ist. Die Gefahr, dass brennbares Gas über den offenen Kreislauf eines flüssigen Mediums in die Umgebung entweichen kann, besteht ebenfalls nicht mehr.

Gemäß der Erfindung wird die Steuer- und/oder Leckagemenge des Kraftstoffinjektors über eine Leitung unmittelbar in das Ansaugrohr des Ansaugtrakts, eingeleitet. Weist die Brennkraftmaschine mehrere Brennräume auf, ist jedem Brennraum ein Kraftstoffinjektor und ein Ansaugrohr zugeordnet. Die Steuer- und/oder Leckagemenge eines Kraftstoffinjektors, der einem ersten Brennraum zugeordnet ist, kann dann in das diesem Brennraum zugeordnete Ansaugrohr oder in ein Ansaugrohr eingeleitet werden, das einem weiteren Brennraum zugeordnet ist. Beides ist möglich und hängt insbesondere von der konkreten Ausgestaltung der Brennkraftmaschine, insbesondere von der Anzahl der Brennräume ab.
Wird die Steuer- und/oder Leckagemenge eines einem ersten Brennraum zugeordneten Kraftstoffinjektors über eine Leitung in ein Ansaugrohr eingeleitet, das einem weiteren Brennraum zugeordnet ist, handelt es sich vorzugsweise um den Brennraum, den es als nächsten mit Luft zu versorgen gilt.
Die Steuer- und/oder Leckagemenge des Kraftstoffinjektors kann aber auch über die Leitung in das Ansaugrohr eingeleitet werden, das dem gerade ansaugenden Brennraum zugeordnet ist.
Alternativ kann die Steuer- und/oder Leckagemenge des Kraftstoffinjektors über eine erste Leitung einer als Sammelleitung dienenden weiteren Leitung zugeführt werden und über die als Sammelleitung dienende weitere Leitung oder über mindestens eine von der weiteren Leitung abzweigenden Leitung in ein Ansaugrohr des Ansaugtrakts, eingeleitet werden. Die Einleitung über eine Sammelleitung besitzt den Vorteil, dass die Steuer- und/oder Leckagemenge des Kraftstoffinjektors gemeinsam mit der Steuer- und/oder Leckagemenge mindestens eines weiteren Kraftstoffinjektors in ein Ansaugrohr des Ansaugtrakts, eingeleitet werden kann, und zwar zentral an einer Stelle oder dezentral über von der Sammelleitung abzweigende Leitungen, die vorzugsweise jeweils einem Ansaugrohr zugeordnet sind. Dadurch, dass die Steuer- und/oder Leckagemengen sämtlicher Kraftstoffinjektoren in der Sammelleitung zusammengeführt werden, ist eine gleichmäßige Verteilung auf die mehreren Brennräume sichergestellt.
Vorteilhafterweise wird die Steuer- und/oder Leckagemenge des Kraftstoffinjektors kontinuierlich in das Ansaugrohr des Ansaugtrakts, eingeleitet. Das heißt, dass die mindestens eine zur Einleitung vorgesehene Leitung permanent offen ist. In der Leitung bzw. in den Leitungen ist daher bevorzugt weder ein Ventil, noch eine Speichereinrichtung vorgesehen. Die Einleitung erfolgt somit ohne Verzögerung, insbesondere ohne Zwischenspeicherung. Der konstruktive Aufwand zur Einleitung der Steuer- und/oder Leckagemenge in den Ansaugtrakt der Brennkraftmaschine ist demzufolge gering, da er im Wesentlichen nur eine einfache Leitung erfordert.

In Weiterbildung der Erfindung wird vorgeschlagen, dass der Kraftstoffinjektor mittels eines 3/2-Wegeventils gesteuert wird. Durch die Verwendung eines 3/2-Wegeventils kann die Steuermenge und damit die in den Ansaugtrakt einzuleitende Menge gering gehalten werden. Denn mit Öffnen des Ventils zur Freigabe eines Ablaufs wird der Zulauf geschlossen.

Die zur Durchführung des erfindungsgemäßen Verfahrens vorgeschlagene Vorrichtung umfasst eine Brennkraftmaschine mit einem Brennraum und einem Kraftstoffinjektor zum Einbringen eines unter Druck stehenden, gasförmigen Kraftstoffs in den Brennraum der Brennkraftmaschine. Der gasförmige Kraftstoff kann dabei unmittelbar oder mittelbar über ein in Verbindung mit dem Brennraum stehendes Ansaugrohr eines der Luftzufuhr dienenden Ansaugtraktes in den Brennraum eingebracht werden. Der Kraftstoffinjektor ist hierzu mit dem Brennraum oder dem Ansaugrohr verbunden. Erfindungsgemäß ist mindestens eine weitere Leitung vorgesehen, über welche der Kraftstoffinjektor mit dem Ansaugtrakt, insbesondere mit dem Ansaugrohr des Ansaugtrakts, verbunden ist, um eine Steuer- und/oder Leckagemenge des Kraftstoffinjektors in den Ansaugtrakt einzuleiten. Die Steuer- und/oder Leckagemenge des Kraftstoffinjektors wird demnach der Verbrennung zugeführt, so dass eine Rückführung in einen Vorratsbehälter bzw. Tank entfallen kann. Dies erlaubt einen effizienten Betrieb der Brennkraftmaschine. Zugleich kann die Vorrichtung einfach aufgebaut sein, da die Einleitung der Steuer- und/oder Leckagemenge des Kraftstoffinjektors in den Ansaugtrakt über eine einfache Leitung erfolgen kann.

Bevorzugt findet ein Kraftstoffinjektor Einsatz, dessen Steuerraum bzw. Steuerraumvolumen sehr klein ist, so dass grundsätzlich nur kleine Steuermengen anfallen. Ferner bevorzugt findet ein 3/2-Wegeventil als Steuerventil Einsatz, da in diesem Fall die Steuermenge bzw. die in den Ansaugtrakt einzuleitende Menge gering gehalten werden kann. Dies ist darauf zurückzuführen, dass bei freigegebenem Ablauf der Zulauf verschlossen ist.

Als Steuermedium wird vorzugsweise der gasförmige Kraftstoff eingesetzt, den es mittels des Kraftstoffinjektors in den Brennraum der Brennkraftmaschine einzubringen gilt. Somit muss nur ein Kraftstoff bzw. ein Medium vorgehalten werden, wodurch der konstruktive Aufwand weiter sinkt.

Vorteilhafterweise ist die zur Einleitung der Steuer- und/oder Leckagemenge des Kraftstoffinjektors vorgesehene Leitung permanent offen. Erfolgt die Einleitung über mehrere Leitungen, sind alle Leitungen permanent offen. Das heißt, dass eine konstante Verbindung des Kraftstoffinjektors mit dem Ansaugtrakt, insbesondere mit dem Ansaugrohr des Ansaugtrakts, besteht. Die Einleitung der Steuer- und/oder Leckagemenge des Kraftstoffinjektors in den Ansaugtrakt der Brennkraftmaschine erfolgt somit kontinuierlich. Dies hat den Vorteil, dass keine zusätzlichen Ventile und/oder Speichereinrichtungen vorgesehen werden müssen, um beispielsweise die Einleitung der Steuer- und/oder Leckagemenge in den Ansaugtrakt zu verzögern oder zu verhindern. Die Vorrichtung kann demzufolge einen vergleichsweise einfachen Aufbau aufweisen.

Bevorzugt ist der Kraftstoffinjektor über eine einzige Leitung mit dem Ansaugtrakt, insbesondere mit einem Ansaugrohr des Ansaugtrakts, verbunden. Weist die Brennkraftmaschine mehrere Brennräume auf, denen jeweils ein Kraftstoffinjektor und ein Ansaugrohr des Ansaugtraktes zugeordnet ist, ist vorzugsweise jeder Kraftstoffinjektor über eine separate Leitung mit dem jeweiligen Ansaugrohr verbunden. Die Einleitung kann jedoch auch in ein Ansaugrohr des Ansaugtrakts erfolgen, das einem anderen Brennraum zugeordnet ist.

Als weiterbildende Maßnahme wird vorgeschlagen, dass die Steuer- und/oder Leckagemenge über eine erste Leitung mit einer als Sammelleitung dienenden weiteren Leitung verbunden ist. Diese Maßnahme wirkt sich insbesondere als Vorteil bei einer Brennkraftmaschine mit mehreren Kraftstoffinjektoren zur Versorgung mehrerer Brennräume mit Kraftstoff aus, da der Leitungsaufwand gering gehalten werden kann. Denn in der Sammelleitung können die Steuer- und/oder Leckagemengen der mehreren Kraftstoffinjektoren zusammengeführt werden. Zugleich stellt die Sammelleitung eine gleichmäßige Verteilung der Steuer- und/oder Leckagemengen der mehreren Kraftstoffinjektoren auf alle Brennräume sicher.

Über die Sammelleitung kann die Steuer- und/oder Leckagemenge des Kraftstoffinjektors unmittelbar oder mittelbar über mindestens eine von der als Sammelleitung abzweigende Leitung, vorzugsweise gemeinsam mit der Steuer- und/oder Leckagemenge mindestens eines weiteren Kraftstoffinjektors, in den Ansaugtrakt eingeleitet werden. Sofern die Einleitung in den Ansaugtrakt über die Sammelleitung erfolgt, ist diese bevorzugt an einer zentralen Stelle mit dem Ansaugtrakt verbunden. Sofern die Einleitung in den Ansaugtrakt, insbesondere in ein Ansaugrohr des Ansaugtrakts, über Abzweigleitungen erfolgt, ist vorzugsweise jede Abzweigleitung einem Ansaugrohr zugeordnet. Die Einleitung erfolgt in diesem Fall dezentral an mehreren Stellen.
Welche Leitungsführung zu bevorzugen ist, hängt insbesondere von der Anzahl der Brennräume der Brennkraftmaschine ab. Denn idealerweise umfasst die Brennkraftmaschine mehrere Brennräume, denen jeweils ein Kraftstoffinjektor zum Einbringen des unter Druck stehenden, gasförmigen Kraftstoffs sowie ein der Luftzufuhr dienendes Ansaugrohr zugeordnet ist.
Zur Versorgung des mindestens einen Kraftstoffinjektors mit dem unter Druck stehenden, gasförmigen Kraftstoff ist vorzugsweise eine Zulaufleitung vorgesehen, die den Kraftstoffinjektor bzw. die mehreren Kraftstoffinjektoren mit einem Vorratsbehälter bzw. Tank für den gasförmigen Kraftstoff verbindet.
Bevorzugte Ausführungsformen der Erfindung werden nachfolgend anhand der beigefügten Zeichnungen näher erläutert. Diese zeigen:
Fig. 1 eine Systemübersicht,
Fig. 2 eine schematische Darstellung einer erfindungsgemäßen Vorrichtung zur Durchführung des erfindungsgemäßen Verfahrens gemäß einer ersten bevorzugten Ausführungsform,
Fig. 3 eine schematische Darstellung einer nicht-erfindungsgemäßen Vorrichtung gemäß einer zweiten Ausführungsform,
Fig. 4 eine schematische Darstellung einer erfindungsgemäßen Vorrichtung zur Durchführung des erfindungsgemäßen Verfahrens gemäß einer dritten bevorzugten Ausführungsform und
Fig. 5 eine schematische Darstellung einer erfindungsgemäßen Vorrichtung zur Durchführung des erfindungsgemäßen Verfahrens gemäß einer vierten bevorzugten Ausführungsform.

### Ausführliche Beschreibung der Zeichnungen

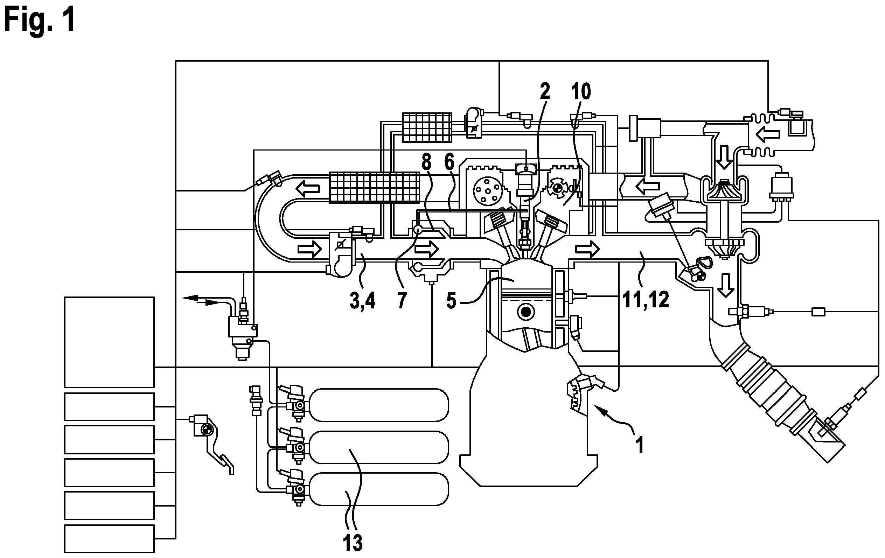

Der Systemübersicht der Fig. 1 ist eine Brennkraftmaschine 1 mit einem Brennraum 5 zu entnehmen, der nach oben von einem Zylinderkopf 10 begrenzt ist. Im Zylinderkopf 10 ist ein Kraftstoffinjektor 2 angeordnet, mittels dessen ein unter Druck stehender, gasförmiger Kraftstoff in den Brennraum 5 einbringbar ist. Um die Verbrennung des gasförmigen Kraftstoffs im Brennraum 5 zu ermöglichen, wird dem Brennraum 5 ferner Verbrennungsluft über ein Ansaugrohr 3 eines Ansaugtrakts 4 zugeführt. Die bei der Verbrennung entstehenden Abgase werden über ein Abgasrohr 11 eines Abgastrakts 12 abgeführt.

Der gasförmige Kraftstoff, der in mehreren unter Druck stehenden Vorratsbehältern 13 bevorratet wird, wird über eine Zulaufleitung 9 dem Kraftstoffinjektor 2 zugeführt. Der dem Kraftstoffinjektor 2 zugeführte gasförmige Kraftstoff dient dabei zugleich als Steuermedium. Die bei der Steuerung des Kraftstoffinjektors 2 anfallende Steuer- und/oder Leckagemenge wird über Leitungen 6, 7, 8 in das Ansaugrohr 3 eingeleitet, so dass diese Menge im Laufe der nächsten Zyklen an der Verbrennung im Brennraum 5 teilnimmt. Eine separate Speicherung oder Rückführung der Steuer- und/oder Leckagemenge in den Vorratsbehälter 13 kann somit entfallen.

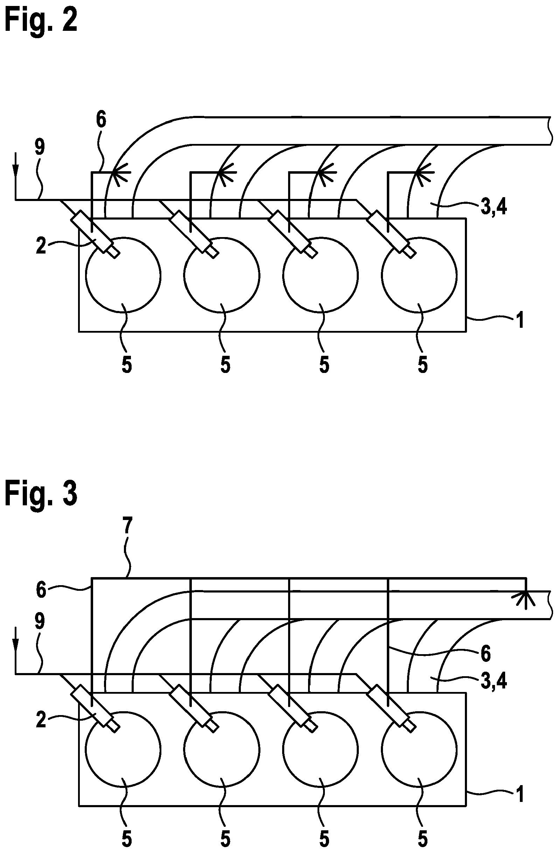

Den Fig. 2 bis 4 sind konkrete Vorschläge zur Leitungsführung zu entnehmen. Den Figuren ist jeweils eine Brennkraftmaschine 1 mit vier Brennräumen 5 zu entnehmen, wobei jedem Brennraum 5 ein Kraftstoffinjektor 2 zum Einbringen des gasförmigen Kraftstoffs und ein Ansaugrohr 3 für die Luftzufuhr zugeordnet ist. Die Versorgung der Kraftstoffinjektoren 2 mit dem gasförmigen Kraftstoff erfolgt über eine Zulaufleitung 9. Darüber hinaus können weitere Leitungen 6, 7, 8 vorgesehen sein, die der Einleitung der Steuer- und/oder Leckagemengen der Kraftstoffinjektoren 2 in den Ansaugtrakt 4 dienen.

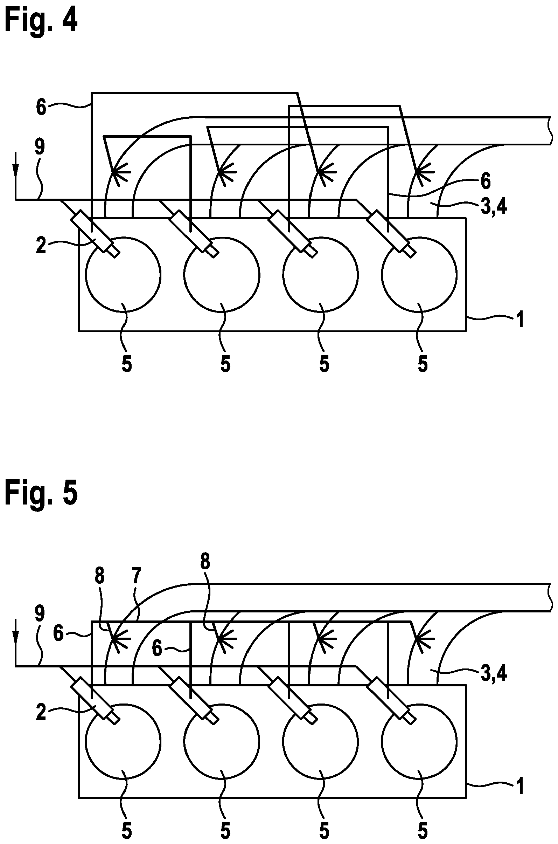

Bei den beiden Ausführungsformen, die in den Figuren 2 und 4 dargestellt sind, ist jeder Kraftstoffinjektor 2 über eine Leitung 6 mit einem Ansaugrohr 3 des Ansaugtrakts 4 verbunden. Das heißt, dass die Anzahl der Leitungen 6 der Anzahl der Kraftstoffinjektoren 2 bzw. der Ansaugrohre 3 entspricht.

In der Fig. 2 ist jeder über eine Leitung 6 mit einem Ansaugrohr 3 verbundene Kraftstoffinjektor 2 demselben Brennraum 5 wie das Ansaugrohr 3 zugeordnet. Dadurch sind kurze Leitungswege garantiert.

In der Fig. 4 sind die Leitungen 6 jeweils mit Ansaugrohren 3 verbunden, die in einen anderen Brennraum 5 führen. Vorzugsweise sind die Verbindungen so gewählt, dass die Steuer- und/oder Leckagemenge des schaltenden Ventils dem gerade oder unmittelbar darauf ansaugenden Zylinder zugeführt wird. Hierdurch lässt sich die im Ansaugtrakt 4 befindliche Gasmenge minimieren, was insbesondere beim Abstellen der Brennkraftmaschine 1 von Relevanz ist, da eventuell noch vorhandenes Restgas in die Umgebung entweichen kann.

Den Figuren 3 und 5 sind Ausführungsformen zu entnehmen, bei denen eine Leitung 7 als Sammelleitung zum Einsatz kommt. Über die Leitung 7 werden demnach die Steuer- und/oder Leckagemengen der mehreren Kraftstoffinjektoren 2 zusammengeführt.

In der Fig. 3 ist die als Sammelleitung dienende Leitung 7 unmittelbar mit dem Ansaugtrakt 4 verbunden, und zwar an einer Stelle stromaufwärts der abzweigenden Ansaugrohre 3. Auf diese Weise ist eine gleichmäßige Verteilung auf die mehreren Ansaugrohre 3 sichergestellt.

In der Fig. 5 zweigen von der als Sammelleitung dienenden Leitung 7 weitere Leitungen 8 ab, welche eine Verbindung der Sammelleitung mit jedem Ansaugrohr 3 herstellen. Das heißt, dass jedem Ansaugrohr 3 eine Leitung 8 zugeordnet ist.

Die Anzahl der Brennräume 5 der Brennkraftmaschine 1 ist in den Fig. 2 bis 4 nur beispielhaft gewählt. Die Brennkraftmaschine 1 einer erfindungsgemäßen Vorrichtung zur Durchführung des erfindungsgemäßen Verfahrens kann auch mehr oder weniger Brennräume 5 aufweisen.

## Patentansprüche

1. Verfahren zum Betreiben einer Brennkraftmaschine (1), bei dem ein unter Druck stehender, gasförmiger Kraftstoff unter Verwendung mindestens eines Kraftstoffinjektors (2) unmittelbar über ein Ansaugrohr (3) eines der Luftzufuhr dienenden Ansaugtrakts (4) in mindestens einen Brennraum (5) der Brennkraftmaschine (1) eingebracht wird,
**dadurch gekennzeichnet, dass** eine Steuer- und/oder Leckagemenge jedes Kraftstoffinjektors (2) unmittelbar über eine Leitung (6) in ein Ansaugrohr (3) des Ansaugtrakts (4), eingeleitet wird, wobei die Anzahl der Leitungen (6) der Anzahl der Kraftstoffinjektoren (2) bzw. der Ansaugrohre (3) entspricht.

2. Verfahren nach Anspruch 1,
**dadurch gekennzeichnet, dass** der gasförmige Kraftstoff als Steuermedium für den Kraftstoffinjektor (2) verwendet wird.

3. Verfahren nach Anspruch 1 oder 2,
**dadurch gekennzeichnet, dass** die Steuer- und/oder Leckagemenge des Kraftstoffinjektors (2) über eine Leitung (6) in ein Ansaugrohr (3) eingeleitet wird, über welches zeitgleich oder unmittelbar hieran anschließend ein Brennraum (5) mit Luft versorgt wird.

4. Verfahren nach einem der vorhergehenden Ansprüche,
**dadurch gekennzeichnet, dass** die Steuer- und/oder Leckagemenge des Kraftstoffinjektors (2) kontinuierlich, insbesondere ohne Zwischenspeicherung, in das Ansaugrohr (3) des Ansaugtrakts (4), eingeleitet wird.

5. Verfahren nach einem der vorhergehenden Ansprüche,
**dadurch gekennzeichnet, dass** der Kraftstoffinjektor (2) mittels eines 3/2-Wegeventils gesteuert wird.

6. Vorrichtung zur Durchführung des Verfahrens nach einem der Ansprüche 1 bis 5, umfassend eine Brennkraftmaschine (1) mit mindestens einem Brennraum (5) und mindestens einem Kraftstoffinjektor (2) zum Einbringen eines unter Druck stehenden, gasförmigen Kraftstoffs unmittelbar über ein Ansaugrohr (3) eines der Luftzufuhr dienenden Ansaugtraktes (4) in den mindestens einen Brennraum (5) der Brennkraftmaschine (1),
**dadurch gekennzeichnet, dass** jeder Kraftstoffinjektor (2) über eine Leitung (6) mit einem Ansaugrohr (3) des Ansaugtrakts (4), zur Einleitung einer Steuer- und/oder Leckagemenge des Kraftstoffinjektors (2) verbunden ist, wobei die Anzahl der Leitungen (6) der Anzahl der Kraftstoffinjektoren (2) bzw. der Ansaugrohre (3) entspricht.

7. Vorrichtung nach Anspruch 6,
**dadurch gekennzeichnet, dass** jeder über die Leitung (6) mit dem Ansaugrohr (3) verbundene Kraftstoffinjektor (2) demselben Brennraum (5) wie das Ansaugrohr (3) zugeordnet ist.

8. Vorrichtung nach Anspruch 6,
**dadurch gekennzeichnet, dass** die Leitungen (6) jeweils mit Ansaugrohren (3) verbunden sind, die in einen anderen Brennraum (5) führen, wobei die Steuer- und/oder Leckagemmenge dem gerade oder unmittelbar darauf ansaugenden Zylinder zugeführt wird.

9. Vorrichtung nach Anspruch 6,
**dadurch gekennzeichnet, dass** ein 3/2-Wegeventil zur Steuerung des Kraftstoffinjektors (2) vorgesehen ist und/oder der gasförmige Kraftstoff als Steuermedium einsetzbar ist.

10. Vorrichtung nach Anspruch 6, 7 oder 8,
**dadurch gekennzeichnet, dass** die zur Einleitung der Steuer- und/oder Leckagemenge des Kraftstoffinjektors (2) vorgesehene Leitung (6) permanent offen sind, so dass eine konstante Verbindung des Kraftstoffinjektors (2) mit dem Ansaugrohr (3) des Ansaugtrakts (4), besteht.

11. Vorrichtung nach einem der Ansprüche 6 bis 10,
**dadurch gekennzeichnet, dass** die Brennkraftmaschine (1) mehrere Brennräume (5) umfasst, denen jeweils ein Kraftstoffinjektor (2) zum Einbringen des unter Druck stehenden, gasförmigen Kraftstoffs sowie ein der Luftzufuhr dienendes Ansaugrohr (3) zugeordnet ist.

12. Vorrichtung nach einem der Ansprüche 6 bis 11,
**dadurch gekennzeichnet, dass** eine Zulaufleitung (9) zur Versorgung des mindestens einen Kraftstoffinjektors (2) mit dem unter Druck stehenden, gasförmigen Kraftstoff vorgesehen ist.

## Claims

1. Method for operating an internal combustion engine (1), in which method a pressurized, gaseous fuel is introduced, using at least one fuel injector (2), directly via an intake pipe (3) of an intake tract (4), which serves for the supply of air, into at least one combustion chamber (5) of the internal combustion engine (1),
**characterized in that** a control and/or leakage quantity of each fuel injector (2) is introduced directly via a line (6) into an intake pipe (3) of the intake tract (4), wherein the number of lines (6) corresponds to the number of fuel injectors (2) or intake pipes (3).

2. Method according to Claim 1,
**characterized in that** the gaseous fuel is used as control medium for the fuel injector (2).

3. Method according to Claim 1 or 2,
**characterized in that** the control and/or leakage quantity of the fuel injector (2) is introduced via a line (6) into an intake pipe (3) via which, simultaneously or immediately subsequently, air is supplied to a combustion chamber (5).

4. Method according to one of the preceding claims,
**characterized in that** the control and/or leakage quantity of the fuel injector (2) is introduced continuously, in particular without intermediate storage, into the intake pipe (3) of the intake tract (4) .

5. Method according to one of the preceding claims,
**characterized in that** the fuel injector (2) is controlled by means of a 3/2 directional valve.

6. Device for carrying out the method according to one of Claims 1 to 5, comprising an internal combustion engine (1) with at least one combustion chamber (5) and with at least one fuel injector (2) for introducing a pressurized, gaseous fuel directly via an intake pipe (3) of an intake tract (4), which serves for the supply of air, into the at least one combustion chamber (5) of the internal combustion engine (1),
**characterized in that** each fuel injector (2) is connected via a line (6) to an intake pipe (3) of the intake tract (4) for the introduction of a control and/or leakage quantity of the fuel injector (2), wherein the number of lines (6) corresponds to the number of fuel injectors (2) or intake pipes (3).

7. Device according to Claim 6,
**characterized in that** each fuel injector (2) connected via the line (6) to the intake pipe (3) is assigned to the same combustion chamber (5) as the intake pipe (3).

8. Device according to Claim 6,
**characterized in that** the lines (6) are in each case connected to intake pipes (3) which lead into a different combustion chamber (5), wherein the control and/or leakage quantity is supplied to the cylinder which is presently, or immediately thereupon, ' in an intake state.

9. Device according to Claim 6,
**characterized in that** a 3/2 directional valve is provided for controlling the fuel injector (2), and/or the gaseous fuel can be used as control medium.

10. Device according to Claim 6, 7 or 8,
**characterized in that** the line (6) provided for the introduction of the control and/or leakage quantity of the fuel injector (2) are permanently open, such that there is a constant connection of the fuel injector (2) to the intake pipe (3) of the intake tract (4).

11. Device according to one of Claims 6 to 10,
**characterized in that** the internal combustion engine (1) comprises multiple combustion chambers (5), which are assigned in each case one fuel injector (2), for introducing the pressurized, gaseous fuel, and one intake pipe (3), which serves for the supply of air.

12. Device according to one of Claims 6 to 11,
**characterized in that** a supply line (9) for the supply of the pressurized, gaseous fuel to the at least one fuel injector (2) is provided.

## Revendications

1. Procédé pour faire fonctionner un moteur à combustion interne (1), dans lequel un carburant gazeux sous pression est introduit en utilisant au moins un injecteur de carburant (2) directement par le biais d'un tube d'aspiration (3) d'un conduit d'aspiration (4) servant à l'alimentation en air dans au moins une chambre de combustion (5) du moteur à combustion interne (1),
**caractérisé en ce qu'**une quantité de commande et/ou de fuite de chaque injecteur de carburant (2) est introduite directement par le biais d'une conduite (6) dans un tube d'aspiration (3) du conduit d'aspiration (4), le nombre de conduites (6) correspondant au nombre d'injecteurs de carburant (2) ou de tubes d'aspiration (3).

2. Procédé selon la revendication 1,
**caractérisé en ce que** le carburant gazeux est utilisé en tant que fluide de commande pour l'injecteur de carburant (2).

3. Procédé selon la revendication 1 ou 2,
**caractérisé en ce que** la quantité de commande et/ou de fuite de l'injecteur de carburant (2) est introduite par le biais d'une conduite (6) dans un tube d'aspiration (3) par le biais duquel une chambre de combustion (5) est alimentée en air en même temps ou immédiatement après.

4. Procédé selon l'une quelconque des revendications précédentes,
**caractérisé en ce que** la quantité de commande et/ou de fuite de l'injecteur de carburant (2) est introduite en continu, notamment sans stockage intermédiaire, dans le tube d'aspiration (3) du conduit d'aspiration (4).

5. Procédé selon l'une quelconque des revendications précédentes,
**caractérisé en ce que** l'injecteur de carburant (2) est commandé au moyen d'une soupape à 3/2 voies.

6. Dispositif pour mettre en oeuvre le procédé selon l'une quelconque des revendications 1 à 5, comprenant un moteur à combustion interne (1) avec au moins une chambre de combustion (5) et au moins un injecteur de carburant (2) pour introduire un carburant gazeux sous pression directement par le biais d'un tube d'aspiration (3) d'un conduit d'aspiration (4) servant à l'alimentation en air, dans l'au moins une chambre de combustion (5) du moteur à combustion interne (1),
**caractérisé en ce que** chaque injecteur de carburant (2) est connecté par le biais d'une conduite (6) à un tube d'aspiration (3) du conduit d'aspiration (4), pour introduire une quantité de commande et/ou de fuite de l'injecteur de carburant (2), le nombre de conduites (6) correspondant au nombre d'injecteurs de carburant (2) ou de tubes d'aspiration (3).

7. Dispositif selon la revendication 6,
**caractérisé en ce que** chaque injecteur de carburant (2) connecté par le biais de la conduite (6) au tube d'aspiration (3) est associé à la même chambre de combustion (5) que le tube d'aspiration (3) .

8. Dispositif selon la revendication 6,
**caractérisé en ce que** les conduites (6) sont à chaque fois connectées à des tubes d'aspiration (3) qui conduisent dans une autre chambre de combustion (5), la quantité de commande et/ou de fuite étant acheminée au cylindre aspirant immédiatement ou juste après.

9. Dispositif selon la revendication 6,
**caractérisé en ce qu'**une soupape à 3/2 voies est prévue pour la commande de l'injecteur de carburant (2) et/ou le carburant gazeux peut être utilisé comme milieu de commande.

10. Dispositif selon la revendication 6, 7 ou 8,
**caractérisé en ce que** la conduite (6) prévue pour introduire la quantité de commande et/ou de fuite de l'injecteur de carburant (2) sont ouverte en permanence, de telle sorte qu'il existe une liaison constante de l'injecteur de carburant (2) au tube d'aspiration (3) du conduit d'aspiration (4) .

11. Dispositif selon l'une quelconque des revendications 6 à 10,
**caractérisé en ce que** le moteur à combustion interne (1) comprend plusieurs chambres de combustion (5) auxquelles est à chaque fois associé un injecteur de carburant (2) pour introduire le carburant gazeux sous pression, ainsi qu'un tube d'aspiration (3) servant à l'alimentation en air.

12. Dispositif selon l'une quelconque des revendications 6 à 11,
**caractérisé en ce qu'**une conduite d'alimentation (9) est prévue pour l'alimentation de l'au moins un injecteur de carburant (2) en carburant gazeux sous pression.
